# EUROPEAN PATENT APPLICATION

(11) **EP 4 349 500 A1**
(43) Date of publication of application: **10.04.2024**
(21) Application number: 22811104.3
(22) Date of filing: 25.04.2022
(51) Int. Cl.: B07B 7/083

(54) **CLASSIFIER AND CLASSIFYING METHOD**

(30) Priority: 24.05.2021 JP 2021087267
(71) Applicant: Panasonic Intellectual Property Management Co., Ltd., Kadoma-shi, Osaka 571-0057 (JP)
(72) Inventor: KAMAKURA Masanao, Osaka 571-0057 (JP); HAYASAKI Yoshiki, Osaka 571-0057 (JP); TSURUI Shota, Osaka 571-0057 (JP)
(74) Representative: SSM Sandmair
(86) International application number: PCT/JP2022/018663
(87) International publication number: WO 2022/249830

(57) **Abstract**

Classification device (1) includes casing (2), rotating body (3), blade (4), drive unit (7), control unit (8), tubular member (9), and bypass flow path forming member (11). Casing (2) includes tubular portion (20). Rotating body (3) is disposed inside tubular portion (20), and blade (4) rotates together with rotating body (3). Drive unit (7) rotationally drives rotating body (3). Control unit (8) controls drive unit (7). Tubular portion (20) includes gas inflow port (21), gas outflow port (22), and particle discharge port (23). Tubular member (9) includes internal space (90) communicating with gas inflow port (21) and powder inlet port (93) through which powder is introduced. Bypass flow path forming member (11) includes bypass flow path (110) communicating with gas inflow port (21) and gas outflow port (22). Control unit (8) controls a rotation speed of rotating body (3) to change a classification diameter of a particle to be discharged from particle discharge port (23).

## Description

### TECHNICAL FIELD

The present disclosure relates to a classification device and a classification method, and more particularly to a classification device and a classification method that classifies particles of powder using a flow of gas.

### BACKGROUND ART

Conventionally, as a classification mechanism, a classification mechanism and a classification method for separating fine powder and coarse powder using a swirling flow caused by rotation of a classification rotor to obtain a product having a predetermined particle size range are known (PTL 1).

The classification mechanism disclosed in PTL 1 includes a body casing, a classification rotor provided inside the body casing, a single rotating shaft on which the classification rotor is mounted, and a single drive source for rotationally driving the single rotating shaft.

### Citation List

### Patent Literature

PTL 1: Unexamined Japanese Patent Publication No. 2014-124607

### SUMMARY OF THE INVENTION

In the classification device, improvement of classification efficiency is desired.

An object of the present disclosure is to provide a classification device and a classification method capable of improving classification efficiency.

A classification device according to an aspect of the present disclosure includes a casing, a rotating body, a blade, a drive unit, and a control unit. The casing includes a tubular portion. The rotating body is disposed inside the tubular portion and is rotatable about a rotation axis along an axial direction of the tubular portion. The blade is disposed between the tubular portion and the rotating body, and rotates together with the rotating body. The drive unit rotationally drives the rotating body. The control unit controls the drive unit. The tubular portion includes a gas inflow port, a gas outflow port that is separated from the gas inflow port in the axial direction and allows an inside and an outside of the tubular portion to communicate with each other, and a particle discharge port. The classification device further includes a tubular member and a bypass flow path forming member. The tubular member includes an internal space communicating with the gas inflow port. The tubular member includes a powder inlet port through which powder having a particle size distribution is introduced. The bypass flow path forming member includes a bypass flow path communicating with the gas inflow port and the gas outflow port. The control unit controls a rotation speed of the rotating body by controlling the drive unit to change a classification diameter of a particle to be discharged from the particle discharge port.

A classification method according to another aspect of the present disclosure classifies powder using a classification device. The classification device includes a casing, a rotating body, and a blade. The casing includes a tubular portion having a circular inner peripheral shape. The rotating body is disposed inside the tubular portion and is rotatable about a rotation axis along an axial direction of the tubular portion. The blade is disposed between the tubular portion and the rotating body, and rotates together with the rotating body. The classification method includes a first step and a second step. In the first step, the rotating body is rotated at a first rotation speed to classify particles having a first classification diameter or more from the powder. In the second step, the rotating body is rotated at a second rotation speed higher than the first rotation speed after the first step, and particles having a second classification diameter or more smaller than the first classification diameter are classified from the powder from which particles having the first classification diameter or more have been separated in the first step.

The classification device and the classification method of the present disclosure can improve the classification efficiency.

### BRIEF DESCRIPTION OF THE DRAWINGS

Fig. 1 is a configuration diagram of a classification device according to a first exemplary embodiment.
Fig. 2 is a perspective view of the classification device.
Fig. 3 is a cross-sectional view including a rotation axis in the classification device.
Fig. 4 is a cross-sectional view orthogonal to the rotation axis in the classification device.
Fig. 5 is a schematic diagram when a first collection container and a second collection container are connected to the classification device.
Fig. 6 is a perspective view of a classification device according to a second exemplary embodiment.
Fig. 7 is a schematic diagram when a particle discharge tubular portion, a first collection container, and a second collection container are connected to the classification device.

### DESCRIPTION OF EMBODIMENT

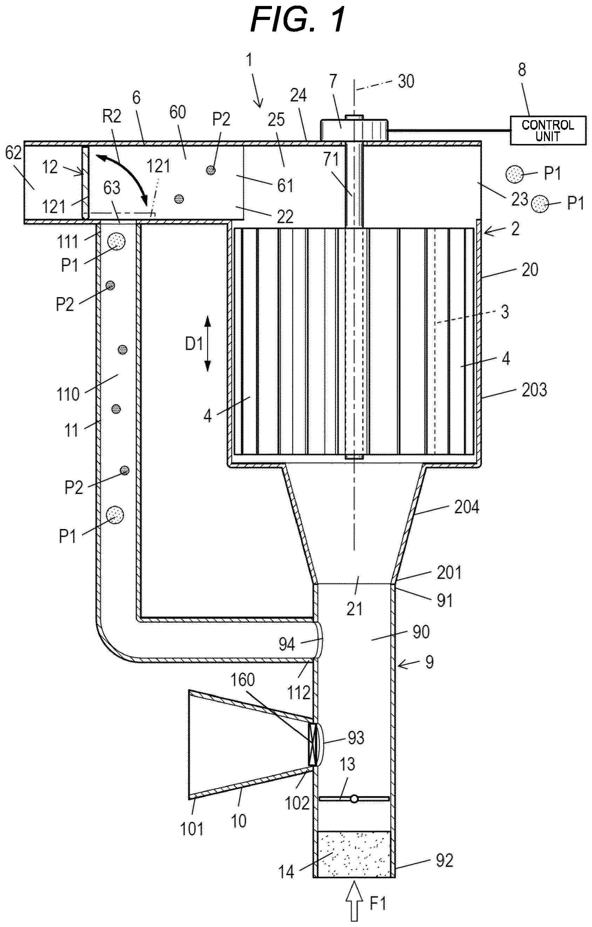

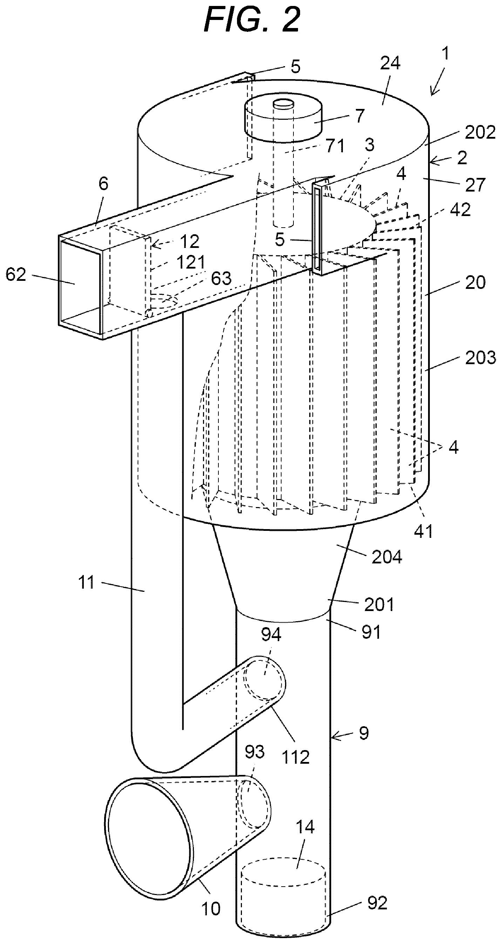

Figs. 1 to 5 described in the following exemplary embodiments and the like is a schematic view, and the ratio of the size and the thickness of each component in the drawing does not necessarily reflect the actual dimensional ratio.

### (First exemplary embodiment)

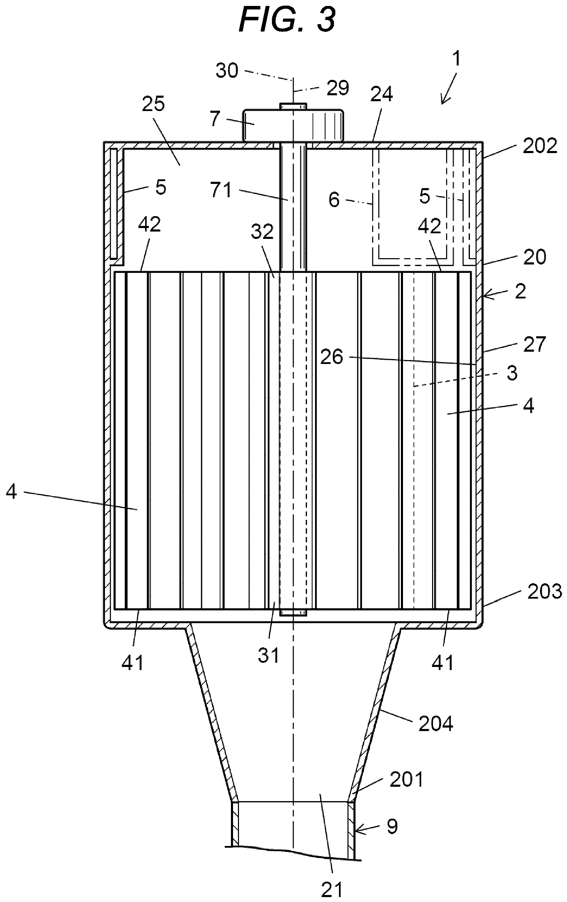

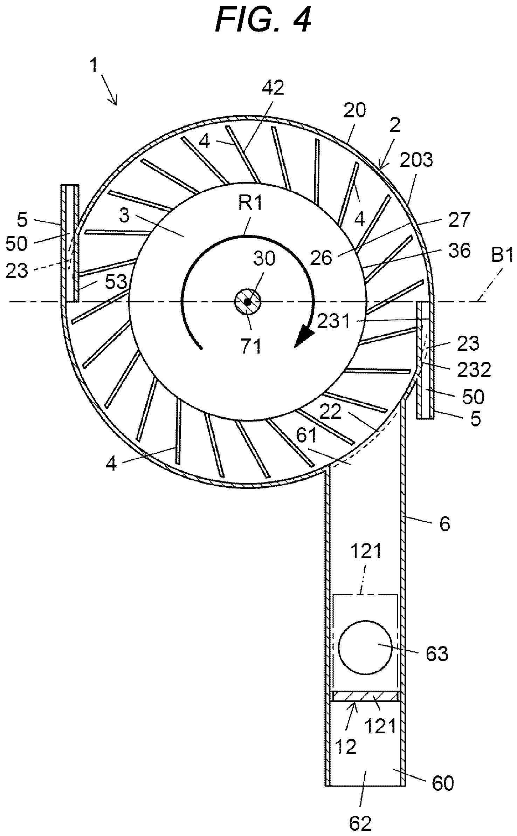

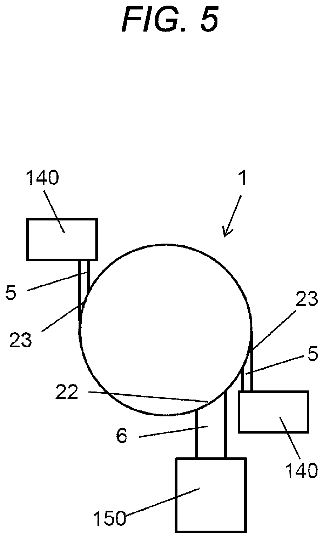

Hereinafter, classification device 1 according to the first exemplary embodiment will be described with reference to Figs. 1 to 5. Fig. 1 is a configuration diagram of classification device 1 according to a first exemplary embodiment. Fig 1 is a perspective view of classification device 1. Fig. 3 is a cross-sectional view including rotation axis 30 in classification device 1. Fig. 4 is a cross-sectional view orthogonal to rotation axis 30 in classification device 1. Fig. 5 is a schematic diagram when first collection container 140 and second collection container 150 are connected to classification device 1 according to the first exemplary embodiment.

### (1) Overview

Classification device 1 classifies powder. The powder has a particle size distribution. In the powder, all the particles do not have a uniform size, and for example, particles having different sizes exist in different proportions within a range from a minimum particle size to a maximum particle size.

As illustrated in Figs. 1 to 4, classification device 1 includes casing 2, rotating body 3, blade 4, drive unit 7, and control unit 8. Casing 2 includes tubular portion 20 including gas inflow port 21, gas outflow port 22, and particle discharge port 23. Rotating body 3 is disposed inside tubular portion 20 and is rotatable about rotation axis 30. Blade 4 is disposed between rotating body 3 and tubular portion 20, and rotates together with rotating body 3. In classification device 1, drive unit 7 rotationally drives rotating body 3. That is, drive unit 7 rotates rotating body 3 about rotating axis 30.

In classification device 1, a part of a flow path from gas inflow port 21 to gas outflow port 22 is formed between casing 2 and rotating body 3. Particle discharge port 23 is a hole for discharging particles having a relatively large particle size among particles contained in the powder to the outside of casing 2.

Classification device 1 can cause the air flowing into gas inflow port 21 of tubular portion 20 of casing 2 to flow toward gas outflow port 22 while rotating spirally around rotating body 3. In classification device 1, the air flowing into a flow path from gas inflow port 21 of casing 2 can be moved while being spirally rotated around rotating body 3 to flow into gas outflow port 22. In classification device 1, particles having a relatively large particle size among particles of powder conveyed by the airflow flowing into casing 2 are discharged from particle discharge port 23 to the outside of casing 2 while passing through the flow path. Fig. 1 schematically illustrates particles having a relatively large particle size among particles contained in a powder as first particles P1 and particles having a relatively small particle size as second particles P2.

### (2) Details

As described above, classification device 1 includes casing 2, rotating body 3, blade 4, drive unit 7, and control unit 8. Furthermore, classification device 1 further includes particle discharge tubular portion 5. Furthermore, classification device 1 further includes outflow tubular portion 6. Furthermore, classification device 1 further includes tubular member 9 and bypass flow path forming member 11.

A material of casing 2 is, for example, metal, but is not limited thereto, and may be resin (for example, ABS resin). Furthermore, casing 2 may include a metal portion formed of metal and a resin portion formed of resin.

Casing 2 includes tubular portion 20 having a circular inner peripheral shape. "Having a circular inner peripheral shape" means that the shape along an inner periphery of the tubular portion 20 is a circular shape. The shape in a direction along an outer periphery of the tubular portion 20 is a circular shape. Tubular portion 20 includes first end 201 and second end 202 in axial direction D1 of tubular portion 20. Casing 2 includes tubular portion 20 and bottom 24 that closes an opening of second end 202 of tubular portion 20. That is, in classification device 1 according to the first exemplary embodiment, casing 2 has a bottomed tubular shape. In tubular portion 20, the opening of first end 201 of tubular portion 20 forms gas inflow port 21. Therefore, gas inflow port 21 penetrates tubular portion 20 in axial direction D1.

In tubular portion 20, an outer diameter of first end 201 is smaller than an outer diameter of portion 203 (Hereinafter, also referred to as cylinder 203.) surrounding rotating body 3 in tubular portion 20. In axial direction D1 of tubular portion 20, a length of cylinder 203 is longer than a length of rotating body 3. An inner diameter and an outer diameter of cylinder 203 are, for example, constant over the entire length of tubular portion 20 in axial direction D1, but are not limited thereto. For example, the inner diameter and the outer diameter of cylinder 203 may gradually decrease as it goes away from second end 202 of tubular portion 20. Furthermore, tubular portion 20 includes portion 204 (Hereinafter, also referred to as enlarged diameter portion 204.) between first end 201 and cylinder 203. An inner diameter and an outer diameter of enlarged diameter portion 204 gradually increase away from first end 201. The outer diameter of enlarged diameter portion 204 is smaller than the inner diameter of the cylinder 203. In enlarged diameter portion 204, an opening area gradually increases away from gas inflow port 21 in axial direction D1 of tubular portion 20.

In tubular portion 20, gas outflow port 22 is separated from gas inflow port 21 in axial direction D 1 of tubular portion 20, and allows the inside and outside of tubular portion 20 communicate with each other between first end 201 and second end 202 of tubular portion 20. Gas outflow port 22 is formed along one direction intersecting axial direction D1 of tubular portion 20 near bottom 24 of casing 2. In other words, gas outflow port 22 is opened to the side of tubular portion 20.

In tubular portion 20, particle discharge port 23 is separated from gas inflow port 21 in axial direction D 1 of tubular portion 20, and allows the inside and outside of tubular portion 20 to communicate with each other between first end 201 and second end 202 of tubular portion 20. Particle discharge port 23 is formed along one direction intersecting axial direction D1 of tubular portion 20 near bottom 24 of casing 2. In other words, particle discharge port 23 is opened to the side of tubular portion 20. Tubular portion 20 includes a plurality of (for example, two) particle discharge ports 23. Two particle discharge ports 23 are separated in a direction along an outer periphery of tubular portion 20. Two particle discharge ports 23 are aligned in one radial direction of tubular portion 20 as viewed in axial direction D1 of tubular portion 20.

In classification device 1, an opening width of each of the plurality of particle discharge ports 23 is shorter than an opening width of gas outflow port 22 in a direction along an outer periphery of tubular portion 20.

Rotating body 3 is disposed inside tubular portion 20 and is rotatable about rotation axis 30 along axial direction D1 of tubular portion 20. Rotating body 3 is coupled to a rotating shaft (shaft) of a motor included in drive unit 7 via shaft 71, for example. Shaft 71 has a round rod shape. A material of shaft 71 is, for example, stainless steel. Drive unit 7 is fixed to casing 2, for example. Shaft 71 is disposed such that its axis coincides with rotation axis 30 of rotating body 3.

Rotating body 3 is disposed coaxially with tubular portion 20 inside tubular portion 20. The phrase "disposed coaxially with tubular portion 20" means that rotating body 3 is disposed so as to align rotation axis 30 of rotating body 3 with central axis 29 (see Fig. 3) of tubular portion 20. Rotating body 3 has, for example, a columnar shape, but is not limited thereto. For example, rotating body 3 may have a bottomed tubular shape having a bottom wall on a side of gas inflow port 21, or may have a truncated cone shape whose outer diameter gradually increases as it goes away from gas inflow port 21 in axial direction D1 of tubular portion 20. In a case where rotating body 3 has a bottomed tubular shape, it is preferable that rotating body 3 includes a reinforcing wall on an inner side. A material of rotating body 3 is, for example, ABS resin or polycarbonate resin.

Rotating body 3 includes first end 31 on a side of gas inflow port 21 and second end 32 on a side of gas outflow port 22. Rotating body 3 is disposed near enlarged diameter portion 204 between enlarged diameter portion 204 and bottom 24 in axial direction D1 of tubular portion 20. More specifically, in axial direction D1 of tubular portion 20, a distance between rotating body 3 and enlarged diameter portion 204 is shorter than a distance between rotating body 3 and bottom 24.

Blade 4 is disposed between tubular portion 20 and rotating body 3, and rotates together with rotating body 3. In classification device 1, a plurality of (here, 24 sheets) blades 4 is disposed between tubular portion 20 and rotating body 3. That is, classification device 1 includes the plurality of blades 4. The plurality of blades 4 are connected to rotating body 3 and separated from inner peripheral surface 26 of tubular portion 20. The plurality of blades 4 rotate together with rotating body 3.

The plurality of blades 4 are provided on rotating body 3 over the entire length of rotating body 3 in a direction along axial direction D1 of tubular portion 20. That is, the plurality of blades 4 are provided from first end 31 to second end 32 of rotating body 3. A material of the plurality of blades 4 is, for example, ABS resin or polycarbonate resin. In classification device 1, the material of the rotating body 3 and the material of the plurality of blades 4 are the same, but the present invention is not limited thereto, and they may be different. The plurality of blades 4 may be formed integrally with rotating body 3, or may be formed as a separate member from rotating body 3 and connected to rotating body 3 by being fixed to rotating body 3.

Each of the plurality of blades 4 is disposed such that a gap is formed between each blade 4 and tubular portion 20 as viewed in axial direction D1 of tubular portion 20. In other words, in classification device 1, there is a gap between each of the plurality of blades 4 and inner peripheral surface 26 of tubular portion 20. In a radial direction of rotating body 3, a distance between each protruding tip of the plurality of blades 4 and outer peripheral surface 36 of rotating body 3 is shorter than a distance between outer peripheral surface 36 of rotating body 3 and inner peripheral surface 26 of tubular portion 20.

Each of the plurality of blades 4 is disposed in parallel with rotation axis 30 of rotating body 3 in a space (flow path) between outer peripheral surface 36 of rotating body 3 and inner peripheral surface 26 of tubular portion 20. Each of the plurality of blades 4 has a flat plate shape. Each of the plurality of blades 4 has a quadrangular shape that is long in a direction along rotation axis 30 of rotating body 3 as viewed in a thickness direction. Each of the plurality of blades 4 is inclined by a predetermined angle (for example, 45 degrees) with respect to one radial direction of rotating body 3 when viewed from a side of bottom 24 in a direction along axial direction D1 of tubular portion 20. In each of the plurality of blades 4, a distal end on a side of tubular portion 20 in the protruding direction from rotating body 3 is located behind a proximal end on a side of rotating body 3 in rotation direction R1 of rotating body 3 (See Fig. 4.). That is, in classification device 1, each of the plurality of blades 4 is inclined by a predetermined angle (for example, 45 degrees) in rotation direction R1 of rotating body 3 with respect to one radial direction of rotating body 3. The predetermined angle is not limited to 45 degrees, and may be an angle larger than 0 degrees and 90 degrees or less. For example, the predetermined angle may be an angle within a range of 10 degrees or more and 80 degrees or less. Each of the plurality of blades 4 is not limited to the case of being inclined by a predetermined angle in rotation direction R11 of rotating body 3 with respect to one radial direction of rotating body 3, and for example, the angle formed with the one radial direction of rotating body 3 may be 0 degrees. That is, the plurality of blades 4 may extend radially from rotating body 3. As illustrated in Fig. 4, the plurality of blades 4 are arranged at equal angular intervals in a direction along an outer periphery of rotating body 3. The "equal angular intervals" mentioned herein are not limited to strictly the same angular intervals, and may be, for example, angular intervals within a predetermined error range (for example, ± 10% of a prescribed angular interval) with respect to a prescribed angular interval.

In axial direction D1 of tubular portion 20, a length of each of the plurality of blades 4 is the same as a length of rotating body 3. The length of each of the plurality of blades 4 is not limited to the same length as rotating body 3, and may be longer or shorter than rotating body 3.

In axial direction D 1 of tubular portion 20, the length of each of the plurality of blades 4 is shorter than a length of cylinder 203.

Each of the plurality of blades 4 includes first end 41 on the side of gas inflow port 21 and second end 42 on the side of gas outflow port 22 and particle discharge port 23 in axial direction D1 of tubular portion 20.

Casing 2 includes space 25 on the side of particle discharge port 23 with respect to second end 42 of each blade 4 in axial direction D1 of tubular portion 20. In classification device 1, particle discharge port 23 is located at a position overlapping space 25 in a direction orthogonal to rotation axis 30. That is, particle discharge port 23 is at a position overlapping space 25 in a direction orthogonal to axial direction D1 of tubular portion 20. Furthermore, in classification device 1, particle discharge port 23 is located at a position not overlapping with each blade 4 in the direction orthogonal to rotation axis 30. That is, particle discharge port 23 is at a position not overlapping each blade 4 in the direction orthogonal to axial direction D1 of tubular portion 20. In other words, there is no blade 4 in a projection region of particle discharge port 23 when tubular portion 20 is viewed from the side.

Drive unit 7 includes, for example, a motor that rotationally drives rotating body 3. Although drive unit 7 couples a rotation shaft of the motor to rotating body 3 via shaft 71, the present invention is not limited thereto, and the rotation shaft of the motor may be directly coupled to rotating body 3. Furthermore, drive unit 7 may be configured to transmit the rotation of the rotating shaft of the motor to rotating body 3 via a pulley and a rotating belt. The motor may be disposed inside casing 2 or may be disposed outside casing 2. A rotation speed of rotating body 3 rotationally driven by drive unit 7 is, for example, 1500 rpm to 3000 rpm.

Control unit 8 controls drive unit 7. Control unit 8 controls the rotation speed of rotating body 3 by controlling drive unit 7 to change a classification diameter of a particle to be discharged from particle discharge port 23.

Control unit 8 includes a computer system. The computer system mainly includes a processor and a memory as hardware. A processor executes a program recorded in a memory of the computer system, thereby implementing a function as control unit 8. The program may be recorded in advance in the memory of the computer system, may be provided through a telecommunication line, or may be provided by being recorded in a non-transitory recording medium such as a memory card, an optical disk, or a hard disk drive readable by the computer system. The processor of the computer system includes one or a plurality of electronic circuits including a semiconductor integrated circuit (IC) or a large-scale integrated (LSI) circuit. The integrated circuit such as an IC or an LSI mentioned here is called differently depending on a degree of integration, and includes integrated circuits called a system LSI, a very large scale integration (VLSI), or an ultra large scale integration (ULSI). Moreover, a field-programmable gate array (FPGA) programmed after manufacture of LSI, and a logical device capable of reconfiguring a joint relationship in LSI or reconfiguring circuit partitions in LSI can also be used as processors. The plurality of electronic circuits may be aggregated in one chip or may be provided in a distributed manner on a plurality of chips. The plurality of chips may be aggregated in one device or may be provided in a distributed manner in a plurality of devices. The computer system mentioned here includes a microcontroller having one or more processors and one or more memories. Therefore, the microcontroller also includes one or a plurality of electronic circuits including a semiconductor integrated circuit or a large scale integration.

Classification device 1 includes particle discharge tubular portion 5 as described above. Particle discharge tubular portion 5 is connected to a peripheral edge of particle discharge port 23 on an outer peripheral surface 27 of tubular portion 20, for example. Particle discharge tubular portion 5 is a member for discharging first particles P1 having a relatively large particle size among the particles contained in the powder. Particle discharge tubular portion 5 includes internal space 50 communicating with particle discharge port 23 and protrudes from outer peripheral surface 27 of tubular portion 20. Particle discharge tubular portion 5 has a rectangular tubular shape. Furthermore, a part of particle discharge tubular portion 5 extends from inner peripheral surface 26 of tubular portion 20 to the inside of tubular portion 20. In particle discharge tubular portion 5, with respect to the portion protruding from outer peripheral surface 27 of tubular portion 20, an opening on a side opposite to a side of particle discharge port 23 has a rectangular shape with a direction along axial direction D 1 of tubular portion 20 as a longitudinal direction. Furthermore, in particle discharge tubular portion 5, with respect to the portion extending from inner peripheral surface 26 of tubular portion 20, the opening on the side opposite to the side of particle discharge port 23 has a rectangular shape with the direction along axial direction D 1 of tubular portion 20 as the longitudinal direction.

In classification device 1, as illustrated in Fig. 4, an inner peripheral surface of particle discharge port 23 in tubular portion 20 includes rear inner surface 231 located on a rear side and front inner surface 232 located on a front side in a direction along rotation direction R1 of rotating body 3. Rear inner surface 231 is formed along one tangential direction of inner peripheral surface 26 of tubular portion 20 as viewed in axial direction D1 of tubular portion 20. Particle discharge tubular portion 5 protrudes in a direction along the one tangential direction as viewed in axial direction D1 of tubular portion 20. Particle discharge tubular portion 5 is at a position not overlapping with blade 4 in a direction orthogonal to rotation axis 30. Part 53 of particle discharge tubular portion 5 extends from inner peripheral surface 26 of tubular portion 20 along front inner surface 232 of particle discharge port 23 to one center line B1 (see Fig. 4) of tubular portion 20. The one center line B1 is orthogonal to rotation axis 30 of rotating body 3 and is orthogonal to an axial direction of particle discharge tubular portion 5. Classification device 1 includes a plurality of (for example, two) particle discharge tubular portions 5. The plurality of particle discharge tubular portions 5 are disposed so as to have rotational symmetry as viewed in axial direction D1 of tubular portion 20.

As illustrated in Fig. 5, classification device 1 may further include first collection container 140 into which the particles discharged through particle discharge port 23 and particle discharge tubular portion 5 enter. As a result, classification device 1 can collect first particles P1 having a relatively large particle size in the powder in first collection container 140.

Furthermore, classification device 1 includes outflow tubular portion 6 as described above. Outflow tubular portion 6 is connected to a peripheral edge of gas outflow port 22 on outer peripheral surface 27 of tubular portion 20, for example. Outflow tubular portion 6 is a member for allowing the gas from which first particles P1 are separated to flow out of casing 2. Outflow tubular portion 6 includes internal space 60 communicating with gas outflow port 22 and protrudes from outer peripheral surface 27 of tubular portion 20. Outflow tubular portion 6 has a rectangular tubular shape. Outflow tubular portion 6 includes inlet 61 on the side of gas outflow port 22, an outlet 62 on a side opposite to the side of gas outflow port 22, and opening 63 that allows internal space 60 of outflow tubular portion 6 and bypass flow path 110 of bypass flow path forming member 11 to communicate with each other. Opening 63 is separated from inlet 61 and outlet 62 between inlet 61 and outlet 62, and allows an inside and an outside of outflow tubular portion 6 to communicate with each other.

In classification device 1, outflow tubular portion 6 is adjacent to one of two particle discharge tubular portions 5. Outflow tubular portion 6 is located in front of adjacent particle discharge tubular portion 5 in a direction along rotation direction R1 of rotating body 3.

In classification device 1, outflow tubular portion 6 is disposed in parallel with adjacent particle discharge tubular portion 5 as viewed in axial direction D1 of tubular portion 20, but the present invention is not limited thereto, and for example, outflow tubular portion 6 may protrude in a direction along one tangential direction of inner peripheral surface 26 of tubular portion 20.

Furthermore, as illustrated in Fig. 5, classification device 1 may further include second collection container 150 into which the particles flowing out through gas outflow port 22 and outflow tubular portion 6 enter. As a result, classification device 1 can collect second particles P2 having a relatively small particle size in the powder in second collection container 150.

Classification device 1 includes tubular member 9 as described above. Tubular member 9 includes internal space 90 communicating with gas inflow port 21. Tubular member 9 includes powder inlet port 93 through which powder is introduced. Tubular member 9 includes first end 91 connected to first end 201 of casing 2 and second end 92 on a side opposite to first end 91. Powder inlet port 93 is formed at a position away from first end 91 and second end 92 between first end 91 and second end 92 in tubular member 9. Classification device 1 further includes powder inlet tubular portion 10. Powder inlet tubular portion 10 includes an internal space communicating with powder inlet port 93 and is connected to tubular member 9. Powder inlet tubular portion 10 is connected to a peripheral edge of powder inlet port 93 on an outer peripheral surface of tubular member 9, for example. Powder inlet tubular portion 10 may be, for example, a hopper. Classification device 1 further includes blocking unit 160 capable of opening and closing powder inlet port 93. Blocking unit 160 is a valve. Accordingly, powder inlet port 93 can be closed by the blocking unit except when the powder is introduced. The blocking unit is controlled by control unit 8, for example. The blocking unit may be a manually operated door.

Furthermore, tubular member 9 includes opening 94 that allows internal space 90 of tubular member 9 and bypass flow path 110 of bypass flow path forming member 11 to communicate with each other. Opening 94 allows the inside and the outside of the tubular member 9 to communicate with each other at a position away from first end 91 and powder inlet port 93 between first end 91 of tubular member 9 and powder inlet port 93.

Bypass flow path forming member 11 is, for example, a duct. Bypass flow path forming member 11 includes first end 111 on the side of gas outflow port 22 and second end 112 on the side of gas inflow port 21. First end 111 of bypass flow path forming member 11 is connected to a peripheral edge of opening 63 of outflow tubular portion 6. Second end 112 of bypass flow path forming member 11 is connected to a peripheral edge of opening 94 of tubular member 9. As a result, classification device 1 can generate an airflow passing through gas inflow port 21, gas outflow port 22, and bypass flow path 110 of casing 2.

Furthermore, classification device 1 further includes switching unit 12. Switching unit 12 switches between a first state in which bypass flow path 110 is used and a second state in which bypass flow path 110 is not used in classification device 1. Switching unit 12 switches between a first flow path passing through bypass flow path 110 and a second flow path not passing through bypass flow path 110 as a flow path of the gas flowing out from gas outflow port 22 of casing 2. Switching unit 12 is controlled by control unit 8, for example, to switch between the first flow path and the second flow path. Switching unit 12 includes, for example, opening and closing body 121. Opening and closing body 121 is disposed, for example, in outflow tubular portion 6. Opening and closing body 121 is rotatable between a first position (a position of opening and closing body 121 indicated by a solid line in Fig. 1) where opening 63 is not covered and internal space 60 of outflow tubular portion 6 is partitioned into a space on a side of outlet 62 of outflow tubular portion 6 and spaces on a side of inlet 61 and a side of opening 63, and a second position (a position of opening and closing body 121 indicated by a two-dot chain line in Fig. 1) where opening 63 of outflow tubular portion 6 is covered and outlet 62 of outflow tubular portion 6 communicates with gas outflow port 22. In Fig. 1, rotation direction R2 of opening and closing body 121 is indicated by an arrow.

Furthermore, classification device 1 further includes flow rate adjustment unit 13. Flow rate adjustment unit 13 adjusts a flow rate of the gas passing through gas inflow port 21, for example. For example, flow rate adjustment unit 13 is disposed closer to first end 91 of tubular member 9 than powder inlet port 93 in internal space 90 of tubular member 9. For example, flow rate adjustment unit 13 is controlled by control unit 8 to adjust the flow rate of the gas passing through gas inflow port 21 when rotating body 3 and blades 4 are rotating. In classification device 1, for example, control unit 8 controls flow rate adjustment unit 13 so that the flow rate of gas inflow port 21 becomes substantially constant even when the rotation speed of rotating body 3 is changed. As a result, classification device 1 can suppress a decrease in classification efficiency due to an increase in a flow velocity caused by an increase in the flow rate of gas inflow port 21 when the rotation speed of rotating body 3 is relatively increased. Flow rate adjustment unit 13 includes, for example, a valve. The valve is a butterfly valve, but is not limited thereto, and may be, for example, a ball valve. In classification device 1, since flow rate adjustment unit 13 is disposed closer to first end 91 of tubular member 9 than powder inlet port 93 in internal space 90 of tubular member 9, it is possible to suppress the powder particles from colliding with flow rate adjustment unit 13.

Furthermore, classification device 1 further includes air filter 14 disposed in tubular member 9 at first end 91 of tubular member 9. Air filter 14 is a filter for removing foreign substances (for example, dust, dirt, particles, and the like) contained in external air sucked from an opening of first end 91 of tubular member 9 when rotating body 3 and blades 4 are rotated in classification device 1. Note that, in Fig. 1, an external air flow is schematically illustrated by trimming arrow F1.

### (3) Operation of classification device

In classification device 1 according to the first exemplary embodiment, rotation direction R1 (see Fig. 4) of rotating body 3 is, for example, a clockwise direction when rotating body 3 is viewed from a side of bottom 24 of casing 2 in axial direction D1 of tubular portion 20. Classification device 1 rotationally drives rotating body 3 by drive unit 7.

In classification device 1, when rotating body 3 rotates, the plurality of blades 4 rotate together with rotating body 3, and the speed vector of the air flowing through the inner space of casing 2 has a speed component in a direction parallel to rotation axis 30 and a speed component in a rotation direction around rotation axis 30. In short, in classification device 1, rotating body 3 and each blade 4 rotate, so that it is possible to generate a swirling airflow in casing 2. The swirling airflow is an airflow that rotates in a three-dimensional spiral shape.

Since the air flow (swirling flow) swirling in the inner space of casing 2 is generated in classification device 1, a part of the particles in the air flowing into casing 2 from gas inflow port 21 of tubular portion 20 is discharged through particle discharge port 23 and particle discharge tubular portion 5, and a part of the air containing the remaining particles flows out from gas outflow port 22 of tubular portion 20.

In classification device 1, the particles contained in the air flowing into casing 2 receive a centrifugal force in a direction from rotation axis 30 of rotating body 3 toward inner peripheral surface 26 of tubular portion 20 when rotating spirally in the inner space of casing 2. The particles subjected to the centrifugal force are likely to spiral toward inner peripheral surface 26 of tubular portion 20 and rotate in the vicinity of inner peripheral surface 26 of tubular portion 20 along inner peripheral surface 26. In classification device 1, some of the particles in the air are discharged from particle discharge tubular portion 5 through particle discharge port 23 while passing through the inner space of casing 2. The centrifugal force acting on the particles is proportional to the mass of the particles. Therefore, particles having a relatively large mass are likely to reach the vicinity of inner peripheral surface 26 of tubular portion 20 earlier than particles having a relatively small mass.

Furthermore, the centrifugal force acting on the particle is proportional to the mass of the particle and a radius of the circular motion of the particle. The radius of the circular motion is a distance between rotation axis 30 of rotating body 3 and the particle in a direction orthogonal to rotation axis 30. When the mass of the particle is m, the velocity of the particle is v, and the radius of the circular motion is r, a magnitude of the centrifugal force is mv²/r. Here, when the angular velocity is ω, since v = rω, the magnitude of the centrifugal force is mω²r. In short, a centrifugal force having a magnitude proportional to the square of ω acts on the particles. Therefore, the magnitude of the centrifugal force acting on the particles can be changed by changing the rotation speed of rotating body 3. Furthermore, when the rotation speed of rotating body 3 is the same, particles having a larger mass are more likely to reach the vicinity of inner peripheral surface 26 of tubular portion 20 before particles having a smaller mass.

In classification device 1, as the rotation speed of rotating body 3 increases, particles having a smaller mass tend to be easily discharged from particle discharge port 23. Regarding the powder particles, when the density of the particles is the same, a particle size of the particles is smaller as the mass of the particles is smaller.

In classification device 1, control unit 8 controls a rotation speed of rotating body 3 by controlling drive unit 7 to change a classification diameter of the particles to be discharged from particle discharge port 23.

In classification device 1, when the powder is introduced from powder inlet port 93 while rotating body 3 and blades 4 are rotated and bypass flow path 110 is in use, the air flow containing first particles P1 larger than the classification diameter and second particles P2 smaller than the classification diameter is circulated through bypass flow path 110, so that first particles P1 are easily discharged from particle discharge port 23. Therefore, classification efficiency can be improved.

In classification device 1, control unit 8 controls the rotation speed of rotating body 3 according to the classification diameter of the particles to be discharged from particle discharge port 23, for example. In classification device 1, the particles remaining in the air without being discharged from particle discharge port 23 include particles having a particle size smaller than a classification diameter.

### (4) Advantages

Classification device 1 according to the first exemplary embodiment includes casing 2, rotating body 3, blade 4, drive unit 7, and control unit 8. Casing 2 includes tubular portion 20 having a circular inner peripheral shape. Rotating body 3 is disposed inside tubular portion 20 and is rotatable about rotation axis 30 along axial direction D1 of tubular portion 20. Blade 4 is disposed between tubular portion 20 and rotating body 3, and rotates together with rotating body 3. Drive unit 7 rotationally drives rotating body 3. Control unit 8 controls drive unit 7. Tubular portion 20 includes gas inflow port 21, gas outflow port 22 that is separated from gas inflow port 21 in axial direction D1 and allows the inside and the outside of tubular portion 20 to communicate with each other, and particle discharge port 23. Classification device 1 further includes tubular member 9 and bypass flow path forming member 11. Tubular member 9 includes an internal space communicating with gas inflow port 21. Tubular member 9 includes powder inlet port 93 through which powder having a particle size distribution is introduced. Bypass flow path forming member 11 includes bypass flow path 110 constituted by an internal space communicating with gas inflow port 21 and gas outflow port 22. Control unit 8 controls the rotation speed of rotating body 3 by controlling drive unit 7 to change a classification diameter of a particle to be discharged from particle discharge port 23.

With the above configuration, classification device 1 according to the first exemplary embodiment can improve classification efficiency.

Furthermore, classification device 1 according to the first exemplary embodiment includes rotating body 3 and blade 4 that rotates together with rotating body 3, and outflow tubular portion 6 protrudes in a direction along one tangential direction of outer peripheral surface 27 of tubular portion 20, so that a pressure loss can be reduced.

Furthermore, classification device 1 according to the first exemplary embodiment includes rotating body 3 and blade 4 that rotates together with rotating body 3, and outflow tubular portion 6 protrudes in the direction along one tangential direction of outer peripheral surface 27 of tubular portion 20. Therefore, for example, by setting the pressure of gas outflow port 22 to be higher than the pressure of gas inflow port 21 by the design of outflow tubular portion 6 or the like, there is an advantage that it is not necessary to separately provide a blower for generating an air flow for conveying powder.

### (Second exemplary embodiment)

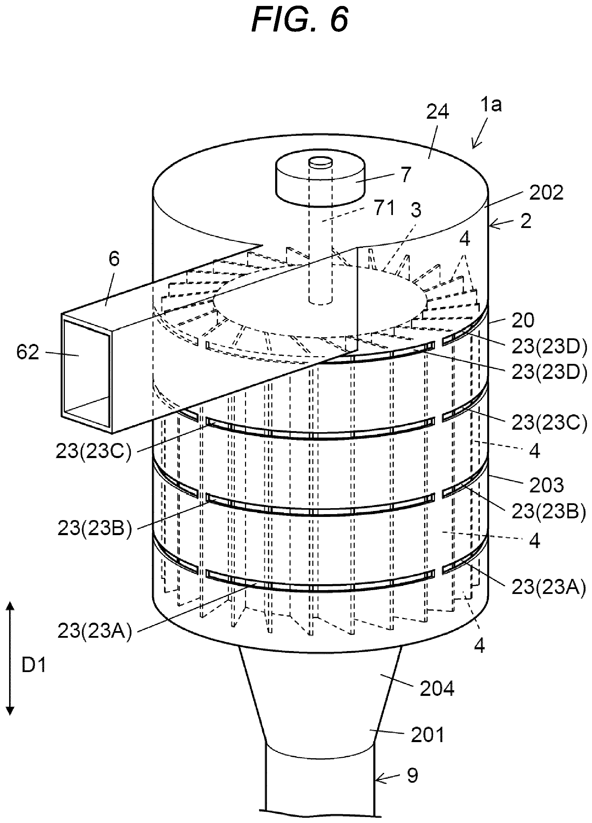

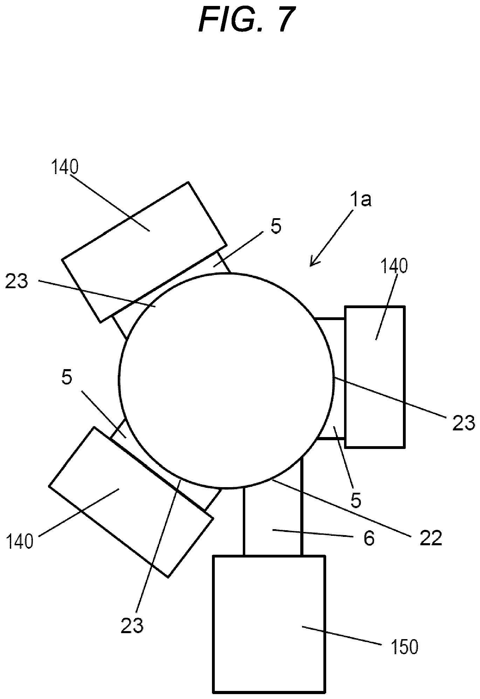

Hereinafter, classification device 1a according to a second exemplary embodiment will be described with reference to Figs. 6 and 7. Fig. 6 is a perspective view of classification device 1a according to the second exemplary embodiment. Fig. 7 is a schematic diagram when particle discharge tubular portion 5, first collection container 140, and second collection container 150 are connected to classification device 1a according to the second exemplary embodiment.

Classification device 1a according to the second exemplary embodiment is substantially the same as classification device 1 according to the first exemplary embodiment (see Fig. 1), and is different from classification device 1 according to the first exemplary embodiment in that tubular portion 20 includes a plurality of particle discharge ports 23 separated from each other in axial direction D1 of tubular portion 20. Regarding classification device 1a according to the second exemplary embodiment, the same components as those of classification device 1 according to the first exemplary embodiment are denoted by the same reference marks, and the description thereof will be omitted. Note that, in Fig. 6, illustration of bypass flow path forming member 11, switching unit 12, tubular member 9, control unit 8, and the like in Fig. 1 is omitted.

Each of the plurality of particle discharge ports 23 has a slit shape elongated in a direction along an outer periphery of tubular portion 20. Each of the plurality of particle discharge ports 23 has an arc shape as viewed in a direction along axial direction D1 of tubular portion 20. As illustrated in Fig. 7, classification device 1a may include a plurality of particle discharge tubular portions 5 corresponding to the plurality of particle discharge ports 23 on a one-to-one basis. As illustrated in Fig. 7, similarly to classification device 1, classification device 1a may include first collection container 140 in which particles discharged through particle discharge port 23 and the particle discharge tubular portion enter for each set of particle discharge port 23 and the particle discharge tubular portion corresponding one-to-one. Furthermore, as illustrated in Fig. 7, classification device 1a may further include second collection container 150 into which the particles flowing out through gas outflow port 22 and outflow tubular portion 6 enter, similarly to classification device 1.

Hereinafter, for convenience of description, the plurality of particle discharge ports 23 separated from each other in axial direction D1 of tubular portion 20 may be referred to as first particle discharge port 23A, second particle discharge port 23B, third particle discharge port 23C, and fourth particle discharge port 23D in order of proximity to gas inflow port 21.

Classification device 1a further includes a first opening and closing unit that opens and closes first particle discharge port 23A, a second opening and closing unit that opens and closes second particle discharge port 23B, a third opening and closing unit that opens and closes third particle discharge port 23C, and a fourth opening and closing unit that opens and closes fourth particle discharge port 23D. Control unit 8 exclusively controls the first opening and closing unit, the second opening and closing unit, the third opening and closing unit, and the fourth opening and closing unit. "Exclusively control" means that one opening and closing unit among the first opening and closing unit, the second opening and closing unit, the third opening and closing unit, and the fourth opening and closing unit is controlled to open the particle discharge port 23 corresponding to the opening and closing unit, and each of the remaining three opening and closing units is controlled to close the corresponding particle discharge port 23. Therefore, control unit 8 performs a first control operation on a set of the first opening and closing unit, the second opening and closing unit, the third opening and closing unit, and the fourth opening and closing unit such that, for example, the first particle discharge port 23A is opened and the second particle discharge port 23B, the third particle discharge port 23C, and the fourth particle discharge port 23D are closed. Furthermore, control unit 8 performs a second control operation on the set of the first opening and closing unit, the second opening and closing unit, the third opening and closing unit, and the fourth opening and closing unit, for example, to open the second particle discharge port 23B and close the first particle discharge port 23A, the third particle discharge port 23C, and the fourth particle discharge port 23D. Furthermore, control unit 8 performs a third control operation on the set of the first opening and closing unit, the second opening and closing unit, the third opening and closing unit, and the fourth opening and closing unit, for example, to open the third particle discharge port 23C and close the first particle discharge port 23A, the second particle discharge port 23B, and the fourth particle discharge port 23D. Furthermore, control unit 8 performs a fourth control operation on the set of the first opening and closing unit, the second opening and closing unit, the third opening and closing unit, and the fourth opening and closing unit, for example, to open the fourth particle discharge port 23D and close the first particle discharge port 23A, the second particle discharge port 23B, and the third particle discharge port 23C.

Furthermore, control unit 8 varies the rotation speed of rotating body 3 in each of the first control operation, the second control operation, the third control operation, and the fourth control operation. In a case where the first control operation is performed on the set, control unit 8 controls drive unit 7 so as to rotate rotating body 3 at a first rotation speed. In a case where the second control operation is performed on the set, control unit 8 controls drive unit 7 so as to rotate rotating body 3 at a second rotation speed higher than the first rotation speed. In a case where the third control operation is performed on the set, control unit 8 controls drive unit 7 to rotate rotating body 3 at a third rotation speed higher than the second rotation speed. In a case where the fourth control operation is performed on the set, control unit 8 controls drive unit 7 to rotate rotating body 3 at a fourth rotation speed higher than the third rotation speed.

The above-described first rotation speed is determined in advance according to a first classification diameter, for example. The first classification diameter is a threshold value of the particle size of the particles to be discharged from the first particle discharge port 23A.

The second rotation speed is determined in advance according to a second classification diameter smaller than the first classification diameter, for example. The second classification diameter is a threshold value of the particle size of the particles to be discharged from the second particle discharge port 23B.

The third rotation speed is determined in advance according to a third classification diameter smaller than the second classification diameter, for example. The third classification diameter is a threshold value of the particle size of the particles to be discharged from the third particle discharge port 23C.

The fourth rotation speed is determined in advance according to a fourth classification diameter smaller than the third classification diameter, for example. The fourth classification diameter is a threshold value of the particle size of the particles discharged from the fourth particle discharge port 23D.

Classification device 1a according to the second exemplary embodiment includes bypass flow path forming member 11 (see Fig. 1) similarly to classification device 1 according to the first exemplary embodiment, and thus, it is possible to improve the classification efficiency.

In a classification method according to the second exemplary embodiment, powder is classified using classification device 1a. Classification device 1a includes casing 2, rotating body 3, and blade 4. Casing 2 includes tubular portion 20 having a circular inner peripheral shape. Rotating body 3 is disposed inside tubular portion 20 and is rotatable about rotation axis 30 along axial direction D1 of tubular portion 20. Blade 4 is disposed between tubular portion 20 and rotating body 3, and rotates together with rotating body 3. The classification method includes, for example, a first step, a second step, a third step, and a fourth step. Note that, in the classification method, rotating body 3 and blade 4 are rotated in a state where opening 63 of outflow tubular portion 6 is not covered with opening and closing body 121 of switching unit 12, but the present invention is not limited thereto. That is, in the classification method, classification device 1 is set to the first state in which bypass flow path 110 is used, but the present invention is not limited thereto, and classification device 1 may be set to the second state in which bypass flow path 110 is not used.

In the first step, rotating body 3 is rotated at the first rotation speed to classify particles having a first classification diameter or more from the powder. Note that, in the first step, control unit 8 performs the first control operation on the set, and then rotates rotating body 3 at the first rotation speed. Furthermore, in the first step, powder inlet port 93 is opened and the powder is introduced from powder inlet port 93 in a state where rotating body 3 is rotated at the first rotation speed. Powder inlet port 93 is closed except when powder is introduced.

In the second step, after the first step, rotating body 3 is rotated at the second rotation speed higher than the first rotation speed, and particles having a second classification diameter or more smaller than the first classification diameter are classified from the powder from which particles having the first classification diameter or more have been separated in the first step. Note that, in the second step, after performing the second control operation on the set, control unit 8 rotates rotating body 3 at the second rotation speed.

In the third step, rotating body 3 is rotated at the third rotation speed higher than the second rotation speed after the second step, and particles having a third classification diameter or more smaller than the second classification diameter are classified from the powder from which particles having the second classification diameter or more have been separated in the second step. Note that, in the third step, control unit 8 performs the third control operation on the set, and then rotates rotating body 3 at the third rotation speed.

In the fourth step, after the third step, rotating body 3 is rotated at the fourth rotation speed higher than the third rotation speed, and particles having a fourth classification diameter or more smaller than the third classification diameter are classified from the powder from which particles having the third classification diameter or more have been separated in the third step. Note that, in the fourth step, after performing the fourth control operation on the set, control unit 8 rotates rotating body 3 at the fourth rotation speed.

The classification method according to the second exemplary embodiment can improve the classification efficiency. Furthermore, the classification method according to the second exemplary embodiment can improve classification accuracy.

The classification method according to the second exemplary embodiment may include at least the first step and the second step among the first step to the fourth step.

### (Modifications)

Each of the first and second exemplary embodiments is merely one of various exemplary embodiments of the present disclosure. The first and second exemplary embodiments can be variously modified according to design or the like as long as the object of the present disclosure can be achieved.

For example, tubular portion 20 in classification device 1 may have a plurality of gas outflow ports 22. In this case, classification device 1 may include a plurality of outflow tubular portions 6.

Furthermore, in classification device 1 according to the first exemplary embodiment, gas inflow port 21 penetrates in axial direction D1 of tubular portion 20 (a surface including gas inflow port 21 intersects axial direction D1). However, the present invention is not limited thereto, and the surface including gas inflow port 21 may intersect a direction orthogonal to axial direction D1 of tubular portion 20.

Furthermore, in classification device 1, the number of particle discharge ports 23 included in tubular portion 20 is not limited to a plurality, and may be one.

Furthermore, shapes of the plurality of particle discharge ports 23 are not limited to be the same as each other, and may be different from each other.

Furthermore, each of the plurality of blades 4 may have a distal end on a side of tubular portion 20 in the protruding direction from rotating body 3 located forward in rotation direction R1 of rotating body 3 than a proximal end on a side of rotating body 3.

Furthermore, each of the plurality of blades 4 may have a shape including one or more curved portions such as an arc shape.

Furthermore, each of the plurality of blades 4 may be formed in a spiral shape around rotation axis 30 of rotating body 3. Here, the "spiral shape" is not limited to a spiral shape having one or more rotation speeds, and includes a partial shape of a spiral shape having one rotation speed.

Switching unit 12 is not limited to the configuration including one opening and closing body 121, and may have a configuration including a first gate valve that opens and closes between inlet 61 and outlet 62 of outflow tubular portion 6 and a second gate valve that opens and closes an opening of first end 111 of bypass flow path forming member 11.

Flow rate adjustment unit 13 is not limited to the configuration for adjusting the flow rate of gas inflow port 21, for example, and may be configured to adjust the flow rate of gas outflow port 22, for example.

### (Aspects)

The present specification discloses the following aspects.

Classification device (1; 1a) according to a first aspect includes casing (2), rotating body (3), blade (4), drive unit (7), and control unit (8). Casing (2) includes tubular portion (20). Rotating body (3) is disposed inside tubular portion (20) and is rotatable about rotation axis (30) along axial direction (D1) of tubular portion (20). Blade (4) is disposed between tubular portion (20) and rotating body (3), and rotates together with rotating body (3). Drive unit (7) rotationally drives rotating body (3). Control unit (8) controls drive unit (7). Tubular portion (20) includes gas inflow port (21), gas outflow port (22) that is separated from gas inflow port (21) in axial direction (D1) and allows an inside and an outside of tubular portion (20) to communicate with each other, and particle discharge port (23). Classification device (1) further includes tubular member (9) and bypass flow path forming member (11). Tubular member (9) includes internal space (90) communicating with gas inflow port (21). Tubular member (9) includes powder inlet port (93) through which powder having a particle size distribution is introduced. Bypass flow path forming member (11) includes bypass flow path (110) communicating with gas inflow port (21) and gas outflow port (22). Control unit (8) controls a rotation speed of rotating body (3) by controlling drive unit (7) to change a classification diameter of a particle to be discharged from particle discharge port (23).

Classification device (1; 1a) according to the first aspect can improve classification efficiency.

Classification device (1; 1a) according to a second aspect, in the first aspect, further includes flow rate adjustment unit (13) that adjusts a flow rate of gas inflow port (21) or gas outflow port (22).

In classification device (1; 1a) according to the second aspect, it is possible to suppress a decrease in the classification efficiency when the rotation speed of rotating body (3) is increased.

Classification device (1; 1a) according to a third aspect, in the first aspect or the second aspect, further includes particle discharge tubular portion (5). Particle discharge tubular portion (5) includes internal space (50) communicating with particle discharge port (23) and protrudes from outer peripheral surface (27) of tubular portion (20). Particle discharge tubular portion (5) protrudes in a direction along a tangential direction of inner peripheral surface (26) of tubular portion (20) as viewed in axial direction (D1) of tubular portion (20).

In classification device (1; 1a) according to the third aspect, particles passing near particle discharge port (23) are easily discharged through particle discharge port (23) and particle discharge tubular portion (5).

Classification device (1; 1a) according to a fourth aspect, in any one of the first aspect to the third aspect, further includes switching unit (12) that switches between a first state in which bypass flow path (110) is used and a second state in which bypass flow path (110) is not used in classification device (1; 1a).

Classification device (1; 1a) according to a fifth aspect, in the fourth aspect, further includes outflow tubular portion (6). Switching unit (12) includes opening and closing body (121). Outflow tubular portion (6) includes internal space (60) communicating with gas outflow port (22), and protrudes from outer peripheral surface (27) of tubular portion (20). Opening and closing body (121) is disposed in outflow tubular portion (6). Outflow tubular portion (6) includes inlet (61) on a side of gas outflow port (22), outlet (62) on a side opposite to the side of gas outflow port (22), and opening (63) that allows internal space (60) of outflow tubular portion (6) and bypass flow path (110) of bypass flow path forming member (11) to communicate with each other. Opening and closing body (121) is rotatable between a first position where opening (63) is not covered and internal space (60) of outflow tubular portion (6) is partitioned into a space on a side of outlet (62) of outflow tubular portion (6) and spaces on a side of inlet (61) and a side of opening (63), and a second position where opening (63) is covered and outlet (62) of outflow tubular portion (6) communicates with gas outflow port (22).

A classification method according to a sixth aspect classifies powder using classification device (1a). Classification device (1a) includes casing (2), rotating body (3), and blade (4). Casing (2) includes tubular portion (20) having a circular inner peripheral shape. Rotating body (3) is disposed inside tubular portion (20) and is rotatable about rotation axis (30) along axial direction (D1) of tubular portion (20). Blade (4) is disposed between tubular portion (20) and rotating body (3), and rotates together with rotating body (3). The classification method includes a first step and a second step. In the first step, rotating body (3) is rotated at a first rotation speed to classify particles having a first classification diameter or more from the powder. In the second step, after the first step, rotating body (3) is rotated at a second rotation speed higher than the first rotation speed, and particles having a second classification diameter or more smaller than the first classification diameter are classified from the powder from which particles having the first classification diameter or more have been separated in the first step.

The classification method according to the sixth aspect can improve the classification efficiency.

### INDUSTRIAL APPLICABILITY

The classification device and the classification method of the present disclosure can improve the classification efficiency. That is, the classification device and the classification method of the present disclosure are industrially useful because the classification device and the classification method can efficiently classify the powder.

### REFERENCE MARKS IN THE DRAWINGS

- 1, 1a: classification device
- 2: casing
- 20: tubular portion
- 201: first end
- 202: second end
- 21: gas inflow port
- 22: gas outflow port
- 23: particle discharge port
- 23A: first particle discharge port
- 23B: second particle discharge port
- 23C: third particle discharge port
- 23D: fourth particle discharge port
- 3: rotating body
- 30: rotation axis
- 31: first end
- 32: second end
- 4: blade
- 41: first end
- 42: second end
- 5: particle discharge tubular portion
- 50: internal space
- 6: outflow tubular portion
- 60: internal space
- 61: inlet
- 62: outlet
- 63: opening
- 7: drive unit
- 8: control unit
- 9: tubular member
- 90: internal space
- 91: first end
- 92: second end
- 93: powder inlet port
- 94: opening
- 11: bypass flow path forming member
- 110: bypass flow path
- 111: first end
- 112: second end
- 12: switching unit
- 121: opening and closing body
- 13: flow rate adjustment unit
- D1: axial direction
- P1: first particle
- P2: second particle
- R1, R2: rotation direction

## Claims

1. A classification device comprising:
a casing including a tubular portion, the tubular portion including a gas inflow port, a gas outflow port that is disposed away from the gas inflow port along an axial direction of the tubular portion and allows an inside and an outside of the tubular portion to communicate with each other, and a particle discharge port;
a rotating body that is disposed inside the tubular portion and is rotatable about a rotation axis disposed along the axial direction;
a blade that is disposed between the tubular portion and the rotating body and rotates together with the rotating body;
a drive unit that rotationally drives the rotating body;
a control unit that controls the drive unit;
a tubular member including an internal space communicating with the gas inflow port, and including a powder inlet port through which powder having a particle size distribution is introduced; and
a bypass flow path forming member including a bypass flow path communicating with the gas inflow port and the gas outflow port,
wherein the control unit controls a rotation speed of the rotating body to change a classification diameter of a particle discharged from the particle discharge port.

2. The classification device according to Claim 1, further comprising a flow rate adjustment unit that adjusts a flow rate of the gas inflow port or the gas outflow port.

3. The classification device according to Claim 1 or Claim 2, further comprising a particle discharge tubular portion that includes an internal space communicating with the particle discharge port, protrudes from an outer peripheral surface of the tubular portion, and protrudes in a direction along a tangential direction of an inner peripheral surface of the tubular portion as viewed in the axial direction.

4. The classification device according to any one of Claim 1 to Claim 3, further comprising a switching unit that switches between a first state in which the bypass flow path is used and a second state in which the bypass flow path is not used in the classification device.

5. The classification device according to Claim 4, further comprising an outflow tubular portion that includes an internal space communicating with the gas outflow port and protrudes from an outer peripheral surface of the tubular portion,
wherein
the outflow tubular portion includes
an inlet on a side of the gas outflow port,
an outlet on a side opposite to the side of the gas outflow port, and
an opening that allows the internal space of the outflow tubular portion and the bypass flow path of the bypass flow path forming member to communicate with each other,
the switching unit includes an opening and closing body disposed in the outflow tubular portion, and
the opening and closing body is rotatable between a first position where the opening is not covered and the internal space of the outflow tubular portion is partitioned into a space on a side of the outlet of the outflow tubular portion and spaces on a side of the inlet and a side of the opening, and a second position where the opening is covered and the outlet of the outflow tubular portion communicates with the gas outflow port.

6. A classification method of classifying powder using a classification device including a casing including a tubular portion having a circular inner peripheral shape, a rotating body disposed inside the tubular portion and rotatable about a rotation central axis along an axial direction of the tubular portion, and a blade disposed between the tubular portion and the rotating body and rotating together with the rotating body, the classification method comprising:
a first step of rotating the rotating body at a first rotation speed to classify particles having a first classification diameter or more from the powder; and
a second step of rotating the rotating body at a second rotation speed higher than the first rotation speed after the first step, and classifying particles having a second classification diameter or more smaller than the first classification diameter from the powder from which particles having the first classification diameter or more have been separated in the first step.
